# EUROPÄISCHE PATENTANMELDUNG

(11) **EP 0 819 917 A1**
(43) Veröffentlichungstag der Anmeldung: **21.01.1998**
(21) Anmeldenummer: 97111268.5
(22) Anmeldetag: 04.07.1997
(51) Int. Cl.: G01D 18/00

(54) **Anordnung und Verfahren zur Qualitätssicherung elektronischer Messeinrichtung**

(30) Priorität: 16.07.1996 DE 19628539
(71) Anmelder: CSB-System Software-Entwicklung & Unternehmensberatung AG, 52511 Geilenkirchen (DE)
(72) Erfinder: Schimitzek, Peter, 52511 Geilenkirchen (DE)
(74) Vertreter: Haussingen, Peter

(57) **Zusammenfassung**

Die Erfindung betrifft eine Anordnung und ein Verfahren zur Qualitätssicherung komplexer elektronischer Meßeinrichtungen. Der Erfindung liegt die Aufgabe zugrunde, eine Anordnung und ein Verfahren zur Qualitätssicherung elektronischer Meßeinrichtungen zu entwickeln, das komplexe Meßsysteme und ihre Module einer ständigen komplexen Qualitätssicherung unterzieht, wobei die Langzeitstabilität des Gesamtsystems kontrolliert und die vorgegebenen Ausgangszustände erhalten bleiben werden sollen. Die Aufgabe wird nach Figur 1 in der Weise realisiert, daß sich ein komplexes Meßsystem (1) zwischen einer vorgeschalteten Informationsquelle (2) und einem nachgeschalteten Informationsempfänger (3) befindet, indem das komplexe Meßsystem (1) aus einer Anzahl N von Komponenten Aᵢ (4) innerhalb des Signalflusses (5) und einem elektronischen Regelsystem (6) besteht, wobei der Signalfluß (5) zwischen den einzelnen Komponenten Aᵢ (4) jeweils Schnittstellen (7) zu dem elektronischen Regelsystem (6) besitzt, über welche Signale eingespeist/empfangen werden, daß in den Einstellbetriebsmodi oder Selbsteinstellbetriebsmodi die Abweichungen der Meß-/Analysedaten vom Sollwert der einzelnen Komponenten Aᵢ (4) durch das elektronische Regelsystem (6) bewertet und dieses Ergebnis als QS-Datensatz (12) an einer einheitlichen Schnittstelle (13) bereitgestellt wird.

## Beschreibung

Die Erfindung betrifft eine Anordnung und ein Verfahren zur Qualitätssicherung komplexer elektronischer Meßeinrichtungen, die für einen längeren Einsatz bestimmt sind. Meßsysteme jeder Art unterliegen im Langzeitverhalten der Trift, welche beispielsweise auf Grund der Alterung von Komponenten durch Temperatur- und Feuchteeinfluß hervorgerufen werden, und stochastischen Kennwertveränderungen, welche beispielsweise durch partielles Versagen von Subsystemen entstehen, die nicht zum Ausfall des Meßsystems führen. Dabei bestehen komplexe Meßsysteme im allgemeinen aus einer Kombination von eichpflichtigen, d.h. nachweislich kalibrierten, und nichteichpflichtigen, d.h. mit einer Anzahl N (einschließlich N=0) von Parametern einstellbaren, Komponenten.
Ein komplexes elektronisches Meßsystem als Ganzes wird kalibriert, indem die eichpflichtigen Komponenten kalibriert und die N Einstellparameter derart festgelegt werden, daß die Bewertung eines/mehrerer als Maßverkörperung dienende Eichobjekte durch das komplexe elektronische Meßsystem innerhalb der zulässigen Toleranz liegt. Derartige Eichungen werden bei speziellen Meßsystemen in der Regel beim Hersteller vorgenommen, der dafür ein Zertifikat benötigt, welches wiederum durch Kalibrierdienste, z.B. die Bundesanstalt für Materialprüfung (BAM), periodisch überprüft wird. Nichteichpflichtige Parametereinstellungen können/müssen vom Nutzer selbst periodisch vorgenommen und dokumentiert werden, der dazu ebenfalls entsprechende Maßverkörperungen (Eichproben) benutzt. Da Kalibrierungsdaten dokumentiert werden müssen, werden sie dokumentenecht in Form von Prüfzertifikaten belegt.
Im Hinblick auf ein flexibles komplexes Meßsystem müssen Kalibrierungsdaten, z.B. Übertragungstaktoren, und Parametereinstellungungen z.B. Verstärkung, jederzeit zur Weiterverarbeitung, insbesondere durch die Meßsoftware, elektronisch abrufbar sein. Dazu werden in modernen Meßsystemen diese Kalibrierungsdaten und/oder Parametereinstellungungen teilweise in elektronisch lesebarer Form gespeichert (z.B. in CMOS-, EEPROM-Speichern) und können somit von übergeordneten elektronischen Systemen abgefragt werden.

In der Druckschrift DE 33 05 129 A1 wird beispielsweise ein spezielles Kalibrierverfahren einer optischen Längenmeßvorrichtung als komplexes Meßsystem mit Hilfe einer externen beleuchteten Meßskala mit zwei zueinander inversen Mustern beschrieben. Dazu werden die mit der Vektorkamera der Meßvorrichtung erfaßten Bilddaten von den zwei inversen Mustern der Meßskala, welche die externe Maßverkörperung darstellt, als Kalibrierungsaufnahme verwendet und die Kalibrierungsdaten, z.B. Längenfaktor und Linearität als Einstellparameter, automatisch ermittelt und abgespeichert. Mit Hilfe dieser Kalibrierungsdaten können die Längen in einer Dimension gemessen werden. Nachteilig ist auf Grund der alleinigen externen Maßverkörperung in Form der speziellen Meßskala die fehlende Möglichkeit einer internen quasikontinuierlichen, d.h. in zeitlich kurzen Abständen, Überprüfung der Eichung. Des weiteren wird nur das Gesamtsystem über eine spezielle Lösung für dieses System geeicht.

Bei nichteichpflichtigen Komponenten ist auf der Grundlage geeigneter Regelkreise, z.B. Proportional-Integral-Differential(PID)-Regelsystemen, Fuzzy-Regelsystemen, Kennwertfelder, etc. eine interne Selbstnachreglung des Istzustandes möglich. Geeignete Regelkreise ermöglichen des weiteren unter Verwendung einer/mehrerer externer Maßverkörperungen am Eingang sowie der Angabe der Sollzustände am Ausgang eine Selbstkalibrierung des Systems.

Nach der Druckschrift DE 42 18 971 C2 ist eine Lösung bekannt, nach der das Kalibrieren der einzelnen Bildsensoren einer Kamera mit Hilfe ganz oder teilweise aus Holz bestehenden Prüflingen, den Maßverkörperungen, erfolgt. Die Kalibrierung gliedert sich in eine radiometrische, eine geometrische und eine kolorimetrische Kalibrierung. Es werden jeweils zwei Meisterfelder unterschiedlicher Helligkeit von der Kamera aufgenommen. Dann werden die Nullpunktverschiebung und die Verstärkung des elektronischen Ausgangssignals soweit verändert bis für jeden Bildpunkt die gemessene Helligkeit mit einem vorgegebenen Soll-Wert übereinstimmt. Das hier beschriebene Kalibrierungssystem stellt eine Kalibrierung eines elektronischen Kamerasystems mit Hilfe eines externen Eichobjektes dar, bei welchem einzelne Bildpunkte nacheinander abgelragt und durch einen analogen Videoverstärker mit dem Einstellparametern Verstärkung und Nullpunkt derart nachverstärkt werden, daß der Sollwertbereich erreicht wird. Der Nachteil dieser Erfindung liegt in der ausschließlichen Verwendung einer externen Maßverkörperung, wodurch nicht quasikontinuierlich das Meßsystem überprüft werden kann. Des weiteren wird nur das Gesamtsystem über eine spezielle Lösung für dieses System geeicht.

Die Verwendung einer/mehrerer langzeitstabilen internen nichteichpflichtigen Referenzgrößen, z.B. abgeleitet von einer Band-Gap-Referenzspannungsquelle, am Eingang der Komponente gestattet in Verbindung mit einer geeigneten Reglung und der Angabe der Sollzustände am Ausgang eine Selbsteinstellung der Komponente. Diese Selbsteinstellung ist relativer Art und wird im allgemeinen auf eine manuell vorgenommene Kalibrierung bezogen.

In der Druckschrift US 4,707,739 wird ein Verfahren zur Einstellung der Bildwiedergabe von Röntgen- und Ultraschallbilder beschrieben. Die von medizinischen Diagnosegeräten stammenden Bilder werden in Viedeosignale umgewandelt, welche über den Bildverstärker-Schaltkreis, die Bildröhre Cathode Ray Tube(CRT) ansteuern. Dabei werden die Darstellungswerte der Bildröhre automatisch auf manuell vorgegebene Referenzwerte geregelt, um eine automatische Belichtungssteuerung automatic exposure (AE) beim Abfotografieren der Bilder zu erreichen. Bei dieser internen Selbsteinstellung wird ein unstabiles, wanderndes Bildmuster mittels eines Rechteckgenerators mit einer stabilen Referenzspannung als interne nichteichpflichtige Maßverkörperung erzeugt und zur Darstellung durch die Bildröhre (CRT) in den Bildverstärker-Schaltkreis eingespeist. Ein Bildsensor erfaßt die lokale Helligkeit, die nachgeschaltete Elektronik detektiert die Spitzenwerte, aus denen die Helligkeit und der Kontrast ermittelt werden. Anschließend wird durch den Regelkreis der Bildverstärker-Schaltkreis, soweit durch Kortektursignale und den Einstellparametern, beeinflußt, bis die gemessene Helligkeit und der gemessene Kontrast mit den manuell vorgegebenen Kalibrierungsbereichen übereinstimmen. Diese Erfindung ermöglicht quasikontinuierlich eine Selbsteinstellung des Sollwertes des Systems auf eine manuell vorgegebene Refererzkalibrierung, indem geeignete interne Signale vor/hinter dem Gesamtsystem, Bildverstärker-Schaltkreis und Bildröhre, eingespeist/erfaßt und mit abgespeicherten Signalen verglichen werden. Der Nachteil dieser Lösung liegt in der nicht gewährleisteten Eichfähigkeit dieses Systems sowie der ausschließlichen Anwendung des Regelprinzips auf das Gesamtsystem. Zudem betrifft diese Erfindung ausschließlich eine spezielle Lösung für die Einstellung eines Bildwiedergabegerätes.

Eine interne Selbstkalibrierung erfordert ein internes Eichnormal, also eine eichpflichtige Komponente, welche als Maßverkörperung benutzt wird und eine abgespeicherte Sollwertvorgabe. Wird statt der eichfähigen Komponente eine nichteichfähige Komponente verwendet, ist anstatt der absolut arbeitenden Selbstkalibrierung nur eine relativ arbeitende Selbsteinstellung, beispielsweise bezogen auf einen manuell kalibrierten Sollwert möglich. Die eichpflichtigen Komponenten, z.B. Sensoren, Normale, werden mittels periodischer Überprüfung durch Kalibrierdienste, welche Prüfzertifikate ausstellen, z.B. durch die Physikalische Technische Bundesanstalt (PTB), kalibriert.
Die Kombination einer Kalibrierung durch externe Maßverkörperung mit einer internen Selbsteinstellung auf diese Kalibrierungsdaten wirkt vom Verhalten näherungsweise als eine interne Selbstkalibrierung. Die vorliegende Erfindung benutzt diese Kombination, wenn keine Möglichkeit der internen Selbstkalibrierung besteht. Dadurch kann quasikontinuierlich die betreffende Komponente in einen definierten Zustand versetzt werden, bzw. die Abweichungen davon an übergeordnete Systeme zur Weiterverarbeitung übermittelt werden.

In den aufgeführten Ausführungsbeispielen zum Stand der Technik werden komplexe Meßsysteme beschrieben, die eine selbstständige Einstellung oder Kalibrierung des Gesamtsystems, welches als eine Komponente betrachtet werden kann, vornehmen. Bei komplexen Systemen aus vielen Komponenten ergeben sich daraus Schwierigkeiten, da im allgemeinen die N Einstellparameter nicht voneinander unabhängig sind. Des weiteren ist bei einem fehlerhaften Verhalten des Gesamtsystems keine selbstständige Eingrenzung des Fehlers möglich. Eine Gewährleistung definierter Zustände in einzelnen Komponenten bzw. die Erfassung von Abweichungen in Ihnen ist somit nicht möglich.

Nach der Druckschrift US 5,251,631 wird ein bildgebendes Ultraschallgerät mit Selbstkalibrierung beschrieben. In dem Ultraschallgerät befindet sich eine Recheneirheit (CPU 26), die auf der Basis von Kalibrierungsdaten oder Standarddaten die Bildwandlereinheit des Ultraschallgerätes über einen Kalibrierungsschaltkreis so ansteuert, daß auf dem Bildschirm das aktuelle Meßbild in der gewünschten geeichten Weise erscheint. Dazu können die Kalibrierungs- bzw. Standarddaten entweder auf einem Speichermedium (RAM, ROM, Diskette oder Festplatte) hinterlegt sein oder von einer Eichprobe neu gewonnen werden. In dieser Erfindung wird mit dem Anwendungsbeispiel des digitalen Aufnahmesystems des weiteren eine Variante beschrieben, bei welcher alle Empfangseinheiten parallel einzeln kalibriert werden. Der Nachteil dieser Erfindung liegt in der ausschließlichen Verwendung externer Maßverkörperungen, wodurch nicht quasikontinuierlich das Meßsystem überprüft werden kann. Die Selbsteichung vieler parallel arbeitender Komponenten, den digitalen Empfangseinheiten, ermöglichst somit nur im Eichbetrieb eine komponentenweise Überprüfung des Systems. Des weiteren ist die beschriebene Kalibrierungseinrichtung speziell auf das verwendete Ultraschallgerät angepaßt.

Der Erfindung liegt die Aufgabe zugrunde, eine Anordnung und ein Verfahren zur Qualitätssicherung elektronischer Meßeinrichtungen zu entwickeln, das komplexe Meßsysteme und ihre Module einer ständigen komplexen Qualitätssicherung unterzieht, wobei die Langzeitstabilität des Gesamtsystems kontrolliert und die vorgegebenen Ausgangszustände erhalten bleiben werden sollen.

Die Vorteile der Erfindung bestehen darin,
- daß die Langzeitstabilisierung des Gesamtsystems und der Komponenten gewährleistet ist,
- daß die Zustandsermittlung am Gesamtsystem und den Komponenten erfolgt,
- daß die Überprüfüng der Kalibrierung manipulationssicher ist,
- daß diese Überprüfung quasikontinuierlich ist,
- daß die Überprüfung an das QSS übermittelbar ist,
- daß verschiedene Systeme auf eine Grundeinstellung justiert werden können,
- daß die vorgegebenen Ausgangszustände, z.B. Kalibrierungen, erhalten bleiben,
- daß Kalibrierungsdaten nichtlöschbar abgespeichert werden und
   daß die Lösung der Erfindung universelle Kalibrierungsmethoden für unterschiedliche Gesamtsysteme beinhaltet.

Erfindungsgemäß wird die Aufgabe durch die im Patentanspruch 1 angegebenen Merkmale gelöst. Bevorzugte Weiterbildungen der Erfindung ergeben sich aus den Unteransprüchen.

Die vorliegende Erfindung unterteilt das Gesamtsystem entsprechend des Informationsflusses in logische/physische Komponenten. Sie gewährleistet für jede Komponente eine quasikontinuierliche Überprüfung/Selbsteinstellung, indem an den Schnittstellen zwischen den Komponenten jeweils entsprechende Ausgangssignaldaten/Analysedaten erfaß/eingespeist und ausgewertet werden. Die entsprechenden Sollwerte wurden für die nichteichpflichtigen Komponenten bei der letzten Kalibrierung mittels externer/interner Maßverkörperung gespeichert, wobei dies auf eine nichtlöschbare Art, z.B. WROM-Speicher, erfolgen kann und mit zusätzlichen Statusangaben, z.B. 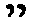 Wer, Wann, Wo, etc. wurde kalibriert?", versehen werden können. Bei eichpflichtigen Komponenten werden die Sollwerte auf Grundlage der zertifizierten Kalibrierungsdaten ermittelt. Eine Überprüfung der Kalibrierung ist dadurch manipulationssicher und somit von jedem Dritten objektiv durchführbar. Des weiteren wird durch die Selbsteinstellung der einzelnen Komponenten eine Langzeitstabilität erreicht.
Dieses modale System aus mehreren Komponenten ermöglicht verbunden mit dem Prinzip der Kalibrierung und Selbsteinstellung dieser Module eine quasikontinuierliche Überprüfung der einzelnen Module durch entsprechende Analysemodi (Check A: Einzelkomponenten; Check B: Doppelkomponenten;...Check Z: Gesamtsystem) für das Qualitätssicherungssystem(QSS).
Durch eine hinreichend große Anzahl von Analysemodi, d.h. größer als die Anzahl der Einzelkomponenten, wird die Möglichkeit für einen Austausch von Teilkomponenten ohne der Notwendigkeit der Neukalibrierung des Gesamtsystems erreicht.
Verschiedene Systeme lassen sich dadurch auf eine Grundeinstellung justieren, indem ihre charakteristischen Merkmale der Einzelkomponenten als Grundlage in die Justierung einfließen, wobei aus den Parametern die Sollwerte bei den einzelnen Analysemodi bestimmt werden.

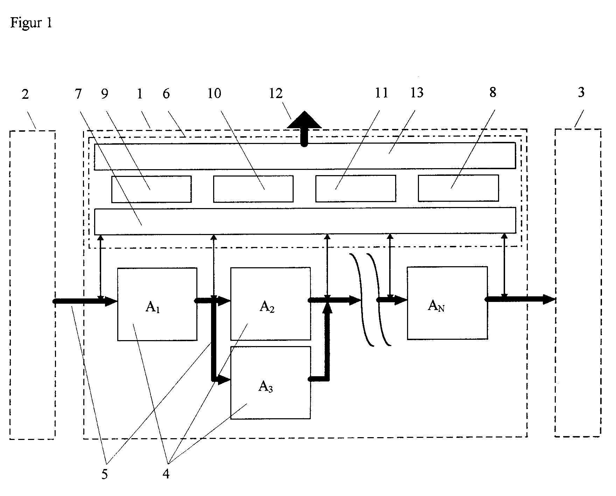

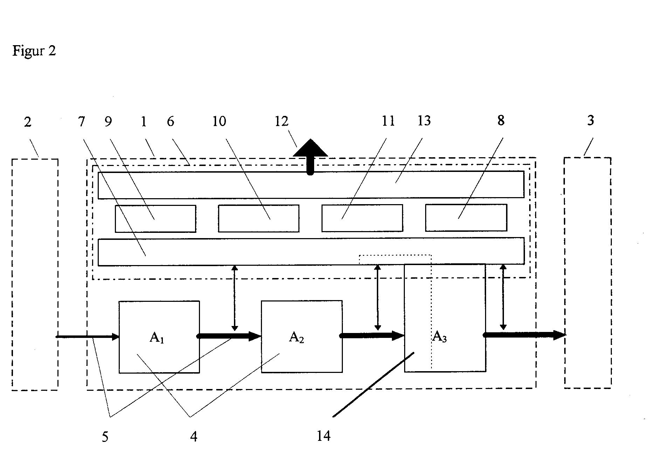

Die Erfindung wird an anhand der Figur 1 an einem allgemeinen komplexen Gesamtsystem und anhand der Figur 2 an einer speziellen Anwendung der erfinderischen Lösung auf ein bildgebendes Ultraschallsystem erläutert.

Nach Figur 1 wird die Qualitätssicherung elektronischer Meßeinrichtungen in der Weise realisiert, daß sich ein komplexes Meßsystem 1 zwischen einer vorgeschalteten Informationsquelle 2 und einem nachgeschalteten Informationsempfänger 3 befindet, indem das komplexe Meßsystem 1 aus einer Anzahl N von Komponenten Aᵢ 4 innerhalb des Signalflusses 5 und einem elektronischen Regelsystem 6 besteht, wobei der Signalfluß 5 zwischen den einzelnen Komponenten Aᵢ 4 jeweils Schnittstellen 7 zu dem elektronischen Regelsystem 6 besitzt, über welche Signale eingespeist/empfangen werden, daß die einzelnen Komponenten Aᵢ 4 eichpflichtige und/oder nichteichpflichtige logische/physische Einheiten der Signalverarbeitung darstellen, wobei bei den eichpflichtigen Komponenten Aᵢ 4 die Kalibrierungsdaten in einen Kalibrierungsdatenspeicher 8 eingelesen werden, wobei die nichteichpflichtigen Komponenten Aᵢ 4 über eine Anzahl Pⁱ Einstellparameter vom elektronischen Regelsystem 6 eingestellt werden können, daß das elektronische Regelsystem 6 den Kalibrierungsdatenspeicher 8 zur Kalibrierung der Komponenten Aᵢ 4 und interne Maßverkörperungen/Langzeitreferenzen 9, Steuersysteme 10 sowie SollIstwertspeicher 11 zur Selbsteinstellung der nichteichpflichteigen Komponenten Aᵢ 4 besitzt, daß in den Selbsteinstellbetriebsmodi die Abweichungen der Meß-/Analysedaten vom Sollwert der einzelnen Komponenten Aᵢ 4 durch das elektronische Regelsystem 6 bewertet und dieses Ergebnis als QS-Datensatz 12 an einer einheitlichen Schnittstelle 13 bereitgestellt wird, daß das elektronische Regelsystem 6 in den Einstellbetriebsmodi oder Selbsteinstellbetriebsmodi die Abweichungen der Meß-/Analysedaten vom Sollwert zur Einstellung der Pⁱ Einstellparameter auf minimale Fehlergröße der einzelnen Komponenten Aᵢ 4 benutzt und diese speichert, daß die Sollwertsätze der Einstellbetriebsmodi oder Selbsteinstellbetriebsmodi aus der charakteristischen Funktion der Komponenten Aᵢ 4 berechnet und in das elektronische Regelsystem 6 eingelesen werden können, wodurch eine eindeutige Grundeinstellung vorgenommen werden kann, daß die Einstellbetriebsmodi oder Selbsteinstellbetriebsmodi eine Überprüfung/ Einstellung einer Kombination zusammenhängender Komponenten Aᵢ 4 unterstützt, wodurch hinreichend viele unabhängige Sollwertsätze gebildet werden, die größer als die Summe ihrer jeweiligen Komponenten Aᵢ 4 ist, wodurch ein Austausch von einzelnen Komponenten Aᵢ 4 ohne Neukalibrierung des komplexen Meßsystems 1 ermöglicht wird, daß bei der Kalibrierung des komplexen Meßsystems 1 die Kalibrierungsdaten und die Sollwertsätze zusammen mit administrativen Angaben gespeichert werden, daß in dem Kalibrierungsdatenspeicher 8 die Kalibrierungsdaten, die Statusdaten und die Sollwertsätze eichfähig gespeichert werden können.

Das Verfahren ist dadurch charakterisiert, daß im ersten Verfahrensschritt die Sollwertsätze der einzelnen Komponenten Aᵢ 4 berechnet oder als ein Referenzabbild eines komplexen Meßsystems 1 aus dem komplexen Mustermeßsystem ausgelesen und als Grundeinstellung des elektronischen Regelsystems 6 im Kalibrierungsdatenspeicher 8 und/oder Ist-sollwertspeicher 11 abgespeichert werden, im zweiten Verfahrensschritt das elektronische Regelsystem 6 die Grundeinstellung der einzelnen Komponenten Aᵢ 4 unabhängig voneinander vornimmt, im dritten Verfahrensschritt das komplexe Meßsystem 1 mittels einer/mehrerer externer Maßverkörperungen in Form spezieller Eingabequellen 2 kalibriert, die zugeordneten Istwertsätze als Sollwertsätze sowie die Kalibrierungsdaten und administrativen Daten gespeichert werden, im vierten Verfahrensschritt das komplexe Meßsystem 1 intern quasikontinuierlich verschiedene Selbsteinstellbetriebsmodi aktiviert, die Abweichung der Ist-Sollwertsätze bewertet sowie als QS-Datensätze 12 zur Weiterverarbeitung im QSS übermittelt, im fünften Verfahrensschritt die Abweichungen durch das elektronische Regelsystem 6 mit Hilfe der Einstellparameter Pⁱ ausgeregelt werden und diese im Ist-Sollwertspeicher 11 gespeichert werden, im sechsten Verfahrensschritt die verschiedenen Selbsteinstellbetriebsmodi eine Lokalisierung fehlerhafter Komponenten Aᵢ 4 unterstützt und im Fall hinreichend vieler Selbsteinstellbetriebsmodi einen Austausch dieser ohne notwendige Neukalibrierung des komplexen Meßsystems 1 ermöglicht, im siebten Verfahrensschritt in den Meßmodi wahlweise die Grundeinstellungen oder beliebige vorherige Kalibrierungen als Sollzustand das Langzeitbetriebsverhalten vorgeben.

Im speziellen Anwendungsbeispiel nach Figur 2 besteht das bildgebende Ultraschallsystem als komplexes elektronisches Meßsystem 1 aus den Komponenten Aᵢ 4, welche einen Meßsensor A₁ ein Ultraschallmeßgerät A₂ und eine Digitale Signalverarbeitungseinheit A₃ darstellen, innerhalb des Signalflusses 5 sowie einem Rechner als elektronisches Regelsystem 6, wobei sich das bildgebende Ultraschallsystem als komplexes elektronisches Meßsystem 1 zwischen dem Referenzobjekt oder dem Meßobjekt als Informationsquelle 2 und der Ausgabeeinheit als Informationsempfänger 3 befindet, wobei der Signalfluß 5 zwischen den Komponenten Aᵢ 4 bei analogen Signalen über Analog-Digital-Umsetzer (ADU) 14, wobei der ADU 14 sowohl dem elektronischen Regelsystem 6 als auch der digitalen Signalverarbeitungseinheit A₃ zugeordnet ist, und bei digitalen Signalen über Datenports als Schnittstellen 7 mit dem Rechner als elektronisches Regelsystem 6 verbunden ist und Ausgangssignaldaten/Analysedaten übermittelt. Dabei stellt der Meßsensor A₁ eine einzelne eichpflichtige Komponente 4 dar, deren Kalibrierungsdaten vom Hersteller mitgeliefert werden. Der elektronische Teil des Ultraschallempfängers A₂ stellt als eine analoge Funktionseinheit eine einzelne logische Komponente 4 dar, die mittels Einstellparameter, z.B. Bandbreite des Empfängers, vom Rechner als elektronisches Regelsystem 6 beeinflußt werden kann. Die Digitale Signalverarbeitung A₃ stellt eine digitale logische Komponente 4 dar, die z.B. über den Einstellparameter Skalierungsfaktor vom Rechner beeinflußt werden kann. Die Analysedaten werden von einer langzeitkonstanten Referenzspannungsquelle als interne Maßverkörperung/Langzeitreferenz 9 abgeleitet. Eine Softwareroutine stellt das Regelsystem 10 dar. Als Ist-Sollwertspeicher 11 dient ein DRAM und als Kalibrierungsdatenspeicher 8 ein EPROM. Die QS-Daten-Schnittstelle 13 ist eine serielle Rechnerschnittstelle V24.

### Verwendete Abkürzungen

- BAM: Bundesanstalt für Materialprüfung
- PID: Proportional-Integral-Differential
- Fuzzy: engl. verschmiert
- CRT: cathode ray tube
- ADU: Analog-Digital-Umsetzer
- PTB: Physikalische Technische Bundesanstalt
- QS: Qualitätssicherung
- QSS: Qualitätssicherungssystem

### Verwendete Bezugszeichen

- 1: komplexes Meßsystem
- 2: vorgeschalteten Informationsquelle
- 3: nachgeschalteten Informationsempfänger
- 4: Komponenten Aᵢ (i=1...N)
- 5: Signalfluß
- 6: Regelsystem
- 7: Schnittstellen
- 8: Kalibrierungsdatenspeicher
- 9: Maßverkörperungen/Langzeitreferenzen
- 10: Steuersysteme
- 11: sowie Soll- Istwertspeicher
- 12: QS-Datensatz
- 13: QS-Daten-Schnittstelle
- 14: ADU

## Patentansprüche

1. Anordnung zur Qualitätssicherung elektronischer Meßeinrichtungen, bei dem sich ein komplexes Meßsystem (1) zwischen einer vorgeschalteten Informationsquelle (2) und einem nachgeschalteten Informationsempfänger (3) befindet, indem das komplexe Meßsystem (1) aus einer Anzahl N von Komponenten Aᵢ (4) innerhalb des Signalflusses (5) und einem elektronischen Regelsystem (6) besteht, dadurch gekennzeichnet, daß der Signalfluß (5) zwischen den einzelnen Komponenten Aᵢ (4) jeweils Schnittstellen (7) zu dem elektronischen Regelsystem (6) besitzt, über welche Signale eingespeist/empfangen werden.

2. Anordnung zur Qualitätssicherung elektronischer Meßeinrichtungen nach Anspruch 1, dadurch gekennzeichnet, daß die einzelnen Komponenten Aᵢ (4) eichpflichtige und/oder nichteichpflichtige logische/physische Einheiten der Signalverarbeitung darstellen, wobei die nichteichpflichtigen Komponenten Aᵢ (4) über eine Anzahl Pⁱ Einstellparameter vom elektronischen Regelsystem (6) eingestellt werden können.

3. Anordnung zur Qualitätssicherung elektronischer Meßeinrichtungen nach Anspruch 1 bis Anspruch 2, dadurch gekennzeichnet, daß das elektronische Regelsystem (6) einen Kalibrierungsdatenspeicher (8) zur Kalibrierung der Komponenten Aᵢ (4) und interne Maßverkörperungen/Langzeitreferenzen (9), Steuersysteme (10) sowie Soll- Istwertspeicher (11) zur Einstellung oder Selbsteinstellung der nichteichpflichteigen Komponenten Aᵢ (4) und zur Überprüfung der eichpflichtigen Komponenten Aᵢ (4) besitzt.

4. Anordnung zur Qualitätssicherung elektronischer Meßeinrichtungen nach Anspruch 1 bis Anspruch 3, dadurch gekennzeichnet, daß die Abweichungen der Meß-/Analysedaten vom Sollwert der einzelnen Komponenten Aᵢ (4) durch das elektronische Regelsystem (6) bewertet und dieses Ergebnis als QS-Datensatz (12) an einer einheitlichen QS-Daten-Schnittstelle (13) bereitgestellt wird.

5. Anordnung zur Qualitätssicherung elektronischer Meßeinrichtungen nach Anspruch 1 bis Anspruch 4, dadurch gekennzeichnet, daß das elektronische Regelsystem (6) in den Einstellbetriebsmodi oder Selbsteinstellbetriebsmodi die Abweichungen der Meß-/Analysedaten vom Sollwert zur Einstellung der Pⁱ Einstellparameter auf minimale Fehlergröße der einzelnen Komponenten Aᵢ (4) benutzt und diese speichert.

6. Anordnung zur Qualitätssicherung elektronischer Meßeinrichtungen nach Anspruch 1 bis Anspruch 5, dadurch gekennzeichnet, daß die Sollwertsätze aus der charakteristischen Funktion der Komponenten Aᵢ (4) berechnet und in das elektronische Regelsystem (6) eingelesen werden können, wodurch eine eindeutige Grundeinstellung vorgenommen werden kann.

7. Anordnung zur Qualitätssicherung elektronischer Meßeinrichtungen nach Anspruch 1 bis Anspruch 5, dadurch gekennzeichnet, daß die Einstellbetriebsmodi oder Selbsteinstellbetriebsmodi eine Überprüfung/ Einstellung einer Kombination zusammenhängender Komponenten Aᵢ (4) unterstützt, wodurch hinreichend viele unabhängige Sollwertsätze gebildet werden, die größer als die Summe ihrer jeweiligen Komponenten Aᵢ (4) ist, wodurch ein Austausch von einzelnen Komponenten Aᵢ (4) ohne Neukalibrierung des komplexen Meßsystems (1) ermöglicht wird.

8. Anordnung zur Qualitätssicherung elektronischer Meßeinrichtungen nach Anspruch 1 bis Anspruch 5, dadurch gekennzeichnet, daß bei der Kalibrierung des komplexen Meßsystems (1) die Kalibrierungsdaten und die Sollwertsätze zusammen mit administrativen Angaben gespeichert werden.

9. Anordnung zur Qualitätssicherung elektronischer Meßeinrichtungen nach Anspruch 1 bis Anspruch 5, dadurch gekennzeichnet, daß in dem Kalibrierungsdatenspeicher (8) die Kalibrierungsdaten, die Statusdaten und die Sollwertsätze eichfähig gespeichert werden.

10. Verfahren zur Qualitätssicherung elektronischer Meßeinrichtungen bei denen ein Signalfluß (5) zwischen einzelnen Komponenten Aᵢ (4) jeweils Schnittstellen (7) zu einem elektronischen Regelsystem (6) besitzt, über welche Signale eingespeist/empfangen werden, dadurch gekennzeichnet, daß
im ersten Verfahrensschritt
die Sollwertsätze der einzelnen Komponenten Aᵢ (4) berechnetet oder als ein Referenzabbild eines komplexen Meßsystems (1) aus dem komplexen Mustermeßsystem ausgelesen und als Grundeinstellung des elektronischen Regelsystems (6) im Kalibrierungsdatenspeicher (8) und/oder Ist-Sollwertspeicher (11) abgespeichert werden,
im zweiten Verfahrensschritt
das elektronische Regelsystem (6) die Grundeinstellung der einzelnen Komponenten Aᵢ (4) unabhängig voneinander vornimmt,
im dritten Verfahrensschritt
das komplexe Meßsystem (1) mittels einer/mehrerer externer Maßverkörperungen in Form spezieller Eingabequellen (2) kalibriert, die zugeordneten Istwertsätze als Sollwertsätze sowie die Kalibrierungsdaten und administrativen Daten gespeichert werden,
im vierten Verfahrensschritt
das komplexe Meßsystem (1) intern quasikontinuierlich verschiedene Einstellbetriebsmodi oder Selbsteinstellbetriebsmodi aktiviert, die Abweichung der Ist-Sollwertsätze bewertet sowie als QS-Datensätze (12) zur Weiterverarbeitung im QSS übermittelt,
im fünften Verfahrensschritt
die Abweichungen durch das elektronische Regelsystem (6) mit Hilfe der Einstellparameter Pⁱ ausgeregelt werden und diese im Ist-Sollwertspeicher (11) gespeichert werden, im sechsten Verfahrensschritt
die verschiedenen Einstellbetriebsmodi oder Selbsteinstellbetriebsmodi eine Lokalisierung fehlerhafter Komponenten Aᵢ (4) unterstützen und im Fall hinreichend vieler Einstellbetriebsmodi oder Selbsteinstellbetriebsmodi einen Austausch dieser ohne notwendige Neukalibrierung des komplexen Meßsystems (1) ermöglichen,
im siebten Verfahrensschritt
in den Meßmodi wahlweise die Grundeinstellungen oder beliebige vorherige Kalibrietungen als Sollzustand das Langzeitbetriebsverhalten vorgeben.
